# EUROPÄISCHE PATENTANMELDUNG

(11) **EP 1 362 731 A2**
(43) Veröffentlichungstag der Anmeldung: **19.11.2003**
(21) Anmeldenummer: 03010538.1
(22) Anmeldetag: 10.05.2003
(51) Int. Cl.: B60K 7/00, B60B 35/02

(54) **Radantrieb**

(30) Priorität: 16.05.2002 DE 10221695
(71) Anmelder: ZF FRIEDRICHSHAFEN AG, 88038 Friedrichshafen (DE)
(72) Erfinder: Ott, Herbert, 88074 Meckenbeuren (DE); Häussler, Stefan, 94034 Passau-Patriching (DE); Bachmann, Max, 88339 Bad Waldsee (DE); Reichhard, Robert, 88048 Friedrichshafen (DE); Klein, Lothar, 88074 Meckenbeuren (DE)

(57) **Zusammenfassung**

Ein Radantrieb (1) mit mindestens einem Antriebsmotor (3) und zugehöriger Leistungselektronik für jedes angetriebene Fahrzeugrad weist eine Achsbrücke (2) auf, in der elektrischen Leitungen (6) integriert sind.

## Beschreibung

Die Erfindung betrifft einen Radantrieb nach der im Oberbegriff von Anspruch 1 näher definierten Art.

Radantriebe zum Antrieb eines Fahrzeugrades werden vorzugsweise in Niederfluromnibussen verwendet, bei welchen jedes angetriebene Fahrzeugrad einen eigenen Antriebsmotor aufweist. Um eine genügend breite Gangbreite im Omnibus zu erreichen, ist es nötig, die axiale Ausdehnung des Radantriebs möglichst gering zu halten. Um den Einstieg in des Omnibus zu erleichtern werden vorzugsweise Portalachsen verwendet.

In der Patentanmeldung DE 199 45 345 A1 der Anmelderin ist ein Radantrieb zum Antrieb eines Fahrzeugrades offenbart, bei welchem ein exzentrisch zur Radachse angeordneter Antriebsmotor über Untersetzungsstufen ein Rad antreibt, welches über eine innerhalb einer Felge angeordneten Bremse bremsbar ist. Das Gehäuse des Antriebsmotors ist mit einer Achsbrücke verbunden. Die Antriebsmotoren sind lösbar mit einer Leistungselektronik verbunden. Diese Verbindung wird nach dem Stand der Technik durch einen auf den Antriebsmotor montierten Klemmenkasten oder Stecker verwirklicht.

Durch die eingeschränkten Platzverhältnisse bei einem Radantrieb ist es bei den aus dem Stand der Technik bekannten Lösungen schwierig, alle Bauteile im Radkasten des Fahrzeugs zu integrieren und die Kabelführung zwischen Antriebsmotor und Leistungselektronik so gestalten, daß es zu keiner Funktionseinschränkung des Radantriebes kommen kann. Weiterhin kann es durch die schwierigen Betriebsbedingungen, wie beispielsweise Verschmutzungen, Feuchtigkeit sowie mechanische und thermische Belastungen im Radkasten zu Störungen oder sogar zum Ausfall des gesamten Radantriebes kommen.

Der vorliegenden Erfindung liegt die Aufgabe zugrunde einen Radantrieb darzustellen, der unabhängig von den Umgebungseinflüssen zuverlässig funktioniert und daß es durch eine geeignete Kabelführung zwischen Antriebsmotor und Leistungselektronik zu keiner Funktionseinschränkung des Radantriebes kommen kann.

Die der Erfindung zugrundeliegende Aufgabe wird durch einen, auch die kennzeichnenden Merkmale des Hauptanspruchs aufweisenden, gattungsgemäßen Radantrieb gelöst.

Durch die Integration einer Klemmstelle in die Achsbrücke ist diese von den Umgebungseinflüssen isoliert und die Kabelführung kann leicht und funktionssicher zu gestaltet werden. Die Achsbrücke wird neben ihrer eigentlichen Funktion zur Verlegung von elektrischen Leitungen verwendet. Die Klemmstelle der elektrischen Leitungen im montierten Zustand befindet sich innerhalb der Achsbrücke. In der Achsbrücke kann ein Deckel vorgesehen werden, der einen direkten Zugang zu den elektrischen Leitungen und zu der Klemmstelle ermöglicht. Wird der Deckel von der Achsbrücke abgenommen, so wird die Klemmstelle der elektrischen Leitungen außerhalb der Achsbrücke für Montage- oder Demontagezwecke zugänglich. Dadurch kann gegenüber den bisherigen Lösungen auf eine kompliziert einzurichtende Zugangsstelle zur Klemmstelle der elektrischen Leitungen verzichtet werden. An dem Deckel kann ein Klemmbrett befestigt werden. Die mechanische Verbindung zwischen Radkopf und Achskörper kann zusätzlich zur Übergabe der elektrischen Leitungen und zum Herstellen der Schutzart verwendet werden. Zur Führung der elektrischen Leitungen beim Einbau, zur Montageerleichterung und zum Schutz der elektrischen Leitungen im Betrieb kann im Achskörper eine Kabelklemme verwendet werden.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

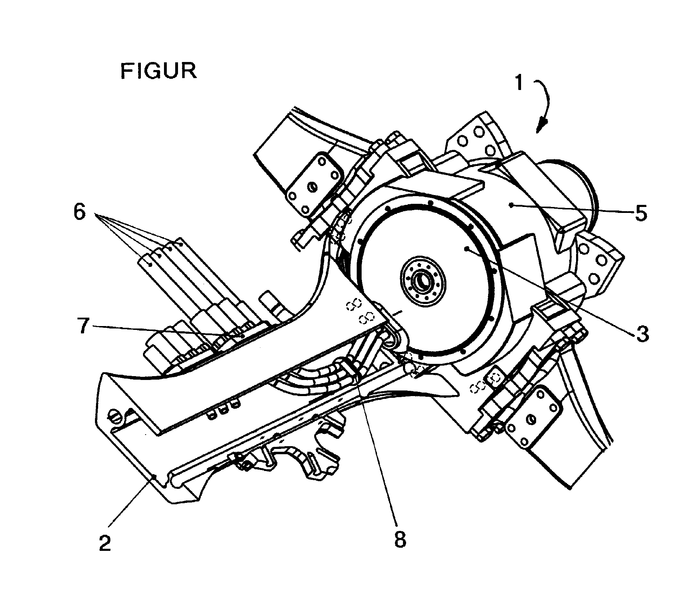

Nachfolgend wird die Erfindung anhand eines in der Figur dargestellten Ausführungsbeispieles näher erläutert.

Die einzige Figur zeigt einen Teilschritt durch einen Radantrieb 1 mit einer Achsbrücke 2, einem Antriebsmotor 3 für ein nicht dargestelltes Fahrzeugrad sowie ein Motorgehäuse 5. Eine nicht dargestellte Leistungselektronik ist über elektrische Leitungen 6 mit dem Antriebsmotor 3 verbunden. Die Achsbrücke 2 wird zur Verlegung von elektrischen Leitungen 6 verwendet. Innerhalb der Achsbrücke 2 befindet sich eine nicht dargestellte Klemmstelle der elektrischen Leitungen 6. Im montierten Zustand sind die elektrischen Leitungen 6 durch die Achsbrücke 2 geschützt. In der Achsbrücke 2 befindet sich ein nicht dargestellter Deckel, der lösbar mit der Achsbrücke 2 verbunden ist. An dem Deckel ist ein Klemmbrett 7 befestigt, wodurch beim Öffnen des Deckels die Klemmstelle der elektrischen Leitungen 6 außerhalb der Achsbrücke 2 zugänglich wird. Die mechanische Verbindung zwischen Antriebsmotor 3 und Achsbrücke 2 wird gleichzeitig zur Übergabe der elektrischen Leitungen 6 und zum Herstellen der Schutzart verwendet. Eine Kabelklemme 8 dient zur Führung der elektrischen Leitungen 6. Durch die Integration der elektrischen Leitungen 6 und der Klemmstelle in die Achsbrücke 2 sind diese von den Umgebungseinflüssen isoliert und die Kabelführung kann einfach und funktionssicher gestaltet werden.

### Bezugszeichen

- 1: Radantrieb
- 2: Achsbrücke
- 3 4: Antriebsmotor
- 5: Motorgehäuse
- 6: Elektrische Leitung
- 7: Klemmbrett
- 8: Kabelklemme

## Patentansprüche

1. Elektrischer Radantrieb (1) mit mindestens einem Antriebsmotor (3), zugehöriger Leistungselektronik für jedes angetriebene Fahrzeugrad, die über elektrische Leitungen (6) miteinander verbunden sind und einer Achsbrücke (2), **dadurch gekennzeichnet, daß** die Achsbrücke (2) zur Verlegung der elektrischen Leitungen (6) verwendet wird.

2. Elektrischer Radantrieb nach Anspruch 1, **dadurch gekennzeichnet, daß** sich eine Klemmstelle der elektrischen Leitungen (6) im montierten Zustand innerhalb der Achsbrücke (2) befindet.

3. Elektrischer Radantrieb nach Anspruch 1, **dadurch gekennzeichnet, daß** sich in der Achsbrücke (2) ein Deckel befindet.

4. Elektrischer Radantrieb nach Anspruch 3, **dadurch gekennzeichnet, daß** ein Klemmbrett (7) an dem Deckel befestigt wird.

5. Elektrischer Radantrieb nach Anspruch 1, **dadurch gekennzeichnet, daß** die mechanische Verbindung zwischen Antriebsmotor (3) und Achsbrücke (2) gleichzeitig zur Übergabe der elektrischen Leitungen (6) und zum Herstellen der Schutzart verwendet wird.

6. Elektrischer Radantrieb nach Anspruch 1, **dadurch gekennzeichnet, daß** eine Kabelklemme (8) verwendet wird, die zur Führung der elektrischen Leitungen (6) beim Einbau, zur Montageerleichterung und zum Schutz der elektrischen Leitungen (6) im Betrieb verwendet wird.
